# EUROPÄISCHE PATENTANMELDUNG

(11) **EP 3 855 608 A1**
(43) Veröffentlichungstag der Anmeldung: **28.07.2021**
(21) Anmeldenummer: 21020024.2
(22) Anmeldetag: 21.01.2021
(51) Int. Cl.: H02K 35/02, E05B 47/00

(54) **WANDLER ZUM WANDELN VON MECHANISCHER IN ELEKTRISCHE ENERGIE**

(30) Priorität: 23.01.2020 AT 222020
(71) Anmelder: EVVA Sicherheitstechnologie GmbH, 1120 Wien (AT)
(72) Erfinder: Enne, Reinhard J., A-1120 Wien (AT); Herza, Claus, A-2380 Perchtoldsdorf (AT)
(74) Vertreter: Keschmann, Marc

(57) **Zusammenfassung**

Bei einem Wandler zum Wandeln von mechanischer in elektrische Energie umfassend einen vorzugsweise geschlossenen Magnetkreis und eine von dessen Magnetfluss durchsetzte Induktionsspule, wobei die Induktionsspule als feststehender Bauteil und der Magnetkreis als beweglicher Bauteil ausgebildet ist, der von einer Blattfeder gehalten zu Schwingbewegungen relativ zur Induktionsspule in lediglich einer Ebene auslenkbar angeordnet ist, ist die Blattfeder an einer Einspannstelle befestigt ist und weist eine Angriffsstelle für eine Schwingungsauslösung auf, wobei die Blattfeder zwischen der Einspannstelle und der Angriffsstelle unter mehrmaliger Kröpfung seitlich an der Induktionsspule vorbeigeführt ist.

## Beschreibung

Die Erfindung betrifft einen Wandler zum Wandeln von mechanischer in elektrische Energie umfassend einen vorzugsweise geschlossenen Magnetkreis und eine von dessen Magnetfluss durchsetzte Induktionsspule, wobei die Induktionsspule als feststehender Bauteil und der Magnetkreis als beweglicher Bauteil ausgebildet ist, der von einer Blattfeder gehalten zu Schwingbewegungen relativ zur Induktionsspule in lediglich einer Ebene auslenkbar angeordnet ist.

Die Erfindung betrifft weiters eine Vorrichtung, beispielsweise Schlüssel oder Schließzylinder, zum Betätigen eines Sperrgliedes, umfassend einen solchen Wandler.

Elektrische oder elektronische Schlösser, insbesondere Zylinderschlösser enthalten in der Regel zusätzlich zu mechanischen Verriegelungen, welche mit konventionellen Schlüsseln mechanisch sperrbar sind, wenigstens einen elektromagnetisch oder motorisch betätigbaren Verriegelungsmechanismus, welcher erst nach einer Identifikationsprüfung freigegeben wird. Die elektronische Schaltung zur Identifikationsüberprüfung wirkt hierbei meist mit geeigneten Identifikationsmedien drahtlos oder drahtgebunden zusammen, wobei in der elektronischen Auswerteschaltung eine Überprüfung erfolgt, ob das jeweilige Identifikationsmedium die Berechtigung zum Sperren des Schlosses aufweist. Nach erfolgreicher Überprüfung der Identität erfolgt dann die Freigabe des Schlosses.

Zur Energieversorgung derartiger elektrischer bzw. elektronischer Verriegelungen ist in der Regel eine ständige Energieversorgung des Schlosses und oft auch des Schlüssels erforderlich und es ist daher neben dem Aufwand für eine derartige ständige Energieversorgung auch dafür Sorge zu tragen, dass eine unterbrechungsfreie Stromversorgung zur Verfügung steht, um die Funktion des Schlosses in jeder Situation aufrecht zu erhalten.

Es ist bereits bekannt geworden, die erforderliche elektrische Energie mit Hilfe eines Wandlers zum Wandeln von mechanischer in elektrische Energie bereitzustellen. Derartige Wandler sind beispielsweise als elektrische Generator ausgebildet und weisen einen Magnetkreis und eine von dessen Magnetfluss durchsetzte Induktionsspule auf, wobei der Magnetkreis oder die Induktionsspule als beweglicher Bauteil und der jeweils andere Teil als feststehender Bauteil ausgebildet ist. Dabei wird durch die Bewegung des beweglich angeordneten Bauteils im Induktionssystem eine Induktionsspannung induziert.

Ein derartiger Wandler ist beispielsweise in der WO 2007/095649 A2 beschrieben. Ein derartiger Wandler zeichnet sich dadurch aus, dass elektrische Energie aus einer Hin- und einer Herbewegung des schwingenden Teils entnommen werden kann.

Nachteilig bei herkömmlichen Wandlern ist jedoch, dass diese einen erheblichen Platzbedarf haben und daher nur schwer in kleinbauende Komponenten, insbesondere in schließtechnische Komponenten wie z.B. einen Schlüssel, einen Schließzylinder oder einen Beschlag eingebaut werden können. Hinzu kommt eine reduzierte Energieausbeute auf Grund von Oberflächenreibung durch die mechanische Führung der bewegten Teile im Wandler.

Die Erfindung zielt darauf ab, einen Wandler der eingangs genannten Art derart weiterzubilden, dass eine miniaturisierte und stabile Bauweise ermöglicht wird, die kostengünstig hergestellt werden kann. Weiters soll die Energieausbeute maximiert werden, um auch bei den auf Grund der Miniaturisierung nur kleinen Auslenkungen des schwingenden Bauteils ein ausreichendes Maß an elektrischer Energie gewinnen zu können.

Zur Lösung dieser Aufgabe besteht die Erfindung bei einem Wandler der eingangs genannten Art im Wesentlichen darin, dass die Blattfeder an einer Einspannstelle befestigt ist und eine Angriffsstelle für eine Schwingungsauslösung aufweist und dass die Blattfeder zwischen der Einspannstelle und der Angriffsstelle unter mehrmaliger Kröpfung seitlich an der Induktionsspule vorbeigeführt ist.

Die Induktionsspule weist hierbei eine Wicklung mit einer Wicklungsachse auf. Das seitliche Vorbeiführen der Blattfeder wird hierbei in Bezug auf die Wicklungsachse definiert, und zwar derart, dass die Blattfeder in Bezug auf die Wicklungsachse radial außerhalb der Induktionsspule neben dieser entlanggeführt ist. Die Blattfeder und die Induktionsspule sind hierbei im Wesentlichen in einer gemeinsamen, quer zur Wicklungsachse verlaufenden Ebene angeordnet, welche der Schwingungsebene des Magnetkreises entspricht. Dadurch wird eine besonders flache Bauweise erreicht, wobei die in Richtung der Wicklungsachse gemessene Bauhöhe des Wandlers vorzugsweise durch die maximale Höhe der Blattfeder einschließlich des daran befestigten Magnetkreises definiert wird und die Induktionsspule vorzugsweise innerhalb dieser maximalen Bauhöhe liegt.

Um die Blattfeder seitlich an der Induktionsspule vorbeizuführen, weist die Blattfeder eine mehrfache Kröpfung auf, wobei jede Kröpfung vorzugsweise durch eine im Wesentlichen rechtwinkelige Umlenkung bzw. Biegung der Blattfeder gebildet wird.

Eine bevorzugte Ausbildung sieht hierbei vor, dass die Einspannstelle und die Angriffsstelle entlang einer gedachten, im Wesentlichen geraden Linie angeordnet sind, die im Wesentlichen parallel zu einer Achse des Magnetkreises, bevorzugt durch einen vom Magnetkreis eingeschlossenen Hohlraum verläuft, und/oder die im Wesentlichen senkrecht zur Wicklungsachse der Induktionsspule verläuft. Die Achse des Magnetkreises wird im Zusammenhang mit der vorliegenden Erfindung als die Symmetrieachse der magnetischen Feldlinien angesehen.

Die Angriffsstelle der Blattfeder ist bevorzugt an einem freien Endbereich der Blattfeder angeordnet und dient dem Angriff eines Schwingungsanregungselements, welches die Blattfeder an der Angriffsstelle in der Schwingungsebene auslenkt. Der die Angriffsstelle aufweisende Endbereich der Blattfeder fluchtet bevorzugt mit dem die Einspannstelle aufweisenden anderen Endbereich der Blattfeder. Die Induktionsspule ist hierbei zwischen den genannten Endbereichen angeordnet, wobei die Blattfeder zwischen der Einspannstelle und der Angriffsstelle wie erwähnt unter mehrmaliger Kröpfung seitlich an der Induktionsspule vorbeigeführt ist. Im vorbeigeführten Bereich bildet die Blattfeder zwischen den miteinander fluchtenden Endbereichen bevorzugt eine C-Form aus.

Die genannte Mehrfachkröpfung der Blattfeder erlaubt einen höheren Miniaturisierungsgrad. Weiters gewährleistet die bevorzugte Anordnung der Einspannstelle und der Angriffsstelle auf einer gedachten, im Wesentlichen geraden Linie ein energetisch vorteilhaftes Ausschwingen des Magnetkreises mit einer beidseitigen, d.h. in beiden Bewegungsrichtungen erfolgenden, Anregung, was eine höhere Energieentnahme ermöglicht. Insbesondere ermöglicht die erfindungsgemäße Ausbildung höhere magnetische Flussänderungen pro Zeiteinheit, was zu höheren Spannungen und damit zu höheren entnehmbaren Energiemengen führt.

Gemäß einer bevorzugten Ausbildung ist die Blattfeder in ihrer Ruhelage in seitlichem Abstand von der Induktionsspule oder einem Spulenträger an dieser bzw. diesem vorbeigeführt. Dies ermöglicht eine anfängliche Auslenkung der Blattfeder in zwei entgegengesetzte Richtungen, wobei der durch den seitlichen Abstand gebildete Spalt derart dimensioniert ist, dass ein freies Ausschwingen der Blattfeder ohne Kollision mit der Induktionsspule bzw. dem Spulenträger gewährleistet ist.

Bevorzugt ist vorgesehen, dass der Magnetkreis im seitlich an der Induktionsspule vorbeigeführten Bereich der Blattfeder an dieser befestigt ist.

Weiters ist es bevorzugt, wenn die Blattfeder in der Schwingungsebene am Magnetkreis angreift. Dadurch wird eine flache Bauweise erreicht.

Eine weitere bevorzugte Ausführungsform sieht vor, dass der Magnetkreis wenigstens einen Dauermagneten aufweist. Der Magnetkreis selbst kann bevorzugt als beidseitig geschlossener Magnetkreis ausgebildet sein. Alternativ ist aber auch eine Ausbildung denkbar, bei welcher der Magnetkreis einseitig offen ist. Die Ausbildung mit beidseitig geschlossenem Magnetkreis hat jedoch den Vorteil, dass sich der magnetische Fluss dabei auf beide Seiten ungefähr gleich aufteilt, sodass die magnetische Sättigung des ferromagnetischen Materials des Magneten weniger schnell erreicht wird. Beim einseitig offenen Magnetkreis wird sich hingegen nur ein kleiner Teil der magnetischen Feldlinien über den offenen Teil schließen. Ein weiterer Vorteil des beidseitig geschlossenen Magnetkreises liegt darin, dass hier die Streuung des Magnetflusses in die Umgebung geringer ist, während der einseitig offene Magnetkreis eine dementsprechende magnetische Streuung besitzt.

Es sind Ausführungen mit zwei Dauermagneten möglich, wobei ein Dauermagnet oberhalb und ein Dauermagnet unterhalb der Induktionsspule angeordnet ist, zwischen welchen die Induktionsspule angeordnet ist. Alternativ ist eine Ausbildung mit lediglich einem Magneten möglich. Die Anordnung des Dauermagneten oberhalb der Induktionsspule bezeichnet die Anordnung des Dauermagneten auf jener Seite der Induktionsspule, die von einem Basisblech, auf dem die feststehende Induktionsspule befestigt ist, abgewandt ist, während die Anordnung des Dauermagneten oberhalb der Induktionsspule die Anordnung des Dauermagneten auf jener Seite der Induktionsspule bezeichnet, die dem Basisblech zugewandt ist.

Der Magnetkreis kann vorzugsweise einen oberen Magnetrückschluss und einen unterer Magnetrückschluss aufweisen, wobei der obere Magnetrückschluss in Richtung einer Achse der Induktionsspule oberhalb und der untere Magnetrückschluss in Richtung einer Achse der Induktionsspule unterhalb der Induktionsspule angeordnet ist.

Bei einer Ausbildung mit nur einem Dauermagnet ist bevorzugt vorgesehen, dass der Dauermanget am oberen Magnetrückschluss angeordnet ist.

Bevorzugt durchsetzt der Magnetkreis die Induktionsspule zwischen dem oberen Magnetrückschluss und dem unterer Magnetrückschluss.

Die Begriffe des oberen und unteren Magnetrückschlusses sind hinsichtlich ihrer räumlichen Orientierung wie oben beschrieben in Bezug auf das Basisblech zu verstehen.

Der Magnetkreis ist bevorzugt so gestaltet, dass jegliche Federbewegung zu einer Bewegungsinduktion in der Induktionsspule führt und damit der Energieernte zugänglich gemacht wird.

Um eine Anregung der Feder durch ein Schwingungsanregungselement in symmetrischer Weise von beiden Seiten der Angriffsstelle zu ermöglichen, ist bevorzugt vorgesehen, dass ein Schwingungsanregungselement exzentrisch einer Drehachse eines drehbaren Bauteils an diesem angeordnet ist, wobei die Drehachse im Wesentlichen normal zur Schwingungsebene des Magnetkreises verläuft und die gedachte gerade Linie schneidet, welche die Einspannstelle und die Angriffsstelle miteinander verbindet. Das Schwingungsanregungselement kann z.B. eine Drückerkupplung eines Türdrückers sein.

Ein weiterer Vorteil der erfindungsgemäßen Ausbildung liegt darin, dass die Induktionsspule feststeht und lediglich der Magnetkreis schwingend gelagert ist, sodass die andernfalls problematische Draht-Zu- und Abführung zu einem bewegten Teil entfällt.

Die Erfindung betrifft gemäß einem weiteren Aspekt eine Vorrichtung, beispielsweise Schlüssel oder Schließzylinder, zum Betätigen eines Sperrgliedes, umfassend den erfindungsgemäßen Wandler. Der Wandler kann hierbei in einem Schloss, vorzugsweise im Zylinderkern eines Zylinderschlosses, angeordnet sein, vorzugsweise derart, dass die Schwingebene des Magnetkreises im Wesentlichen parallel zur Einführrichtung eines Schlüssels verläuft, wobei die Blattfeder beim Einführen des Schlüssels mit einem Mitnehmer des Schlüssels zusammenwirkt und zu Schwingbewegungen ausgelenkt wird.

Weiters kann der Wandler in der Reide eines Schlüssels angeordnet sein.

Die Erfindung wird nachfolgend anhand eines in der Zeichnung schematisch dargestellten Ausführungsbeispiels näher erläutert.

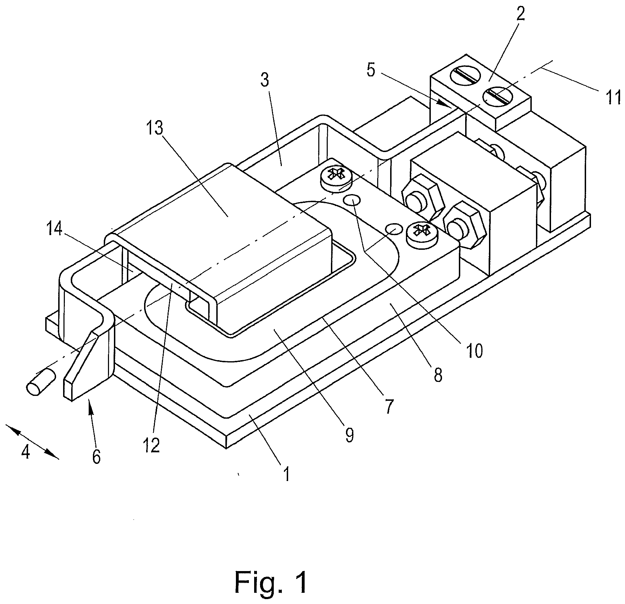

In Fig. 1 ist ein Basisblech mit 1 bezeichnet. Das Basisblech trägt eine Klemmvorrichtung 2 zum Festlegen einer Blattfeder 3. Die Blattfeder 3 ist aus flachem Federstahl gebildet und so angeordnet, dass sie Schwingbewegungen in einer Schwingungsebene entsprechend dem Doppelpfeil 4 ausführen kann. Hierzu ist die Blattfeder 3 an einer von der Klemmvorrichtung 2 gebildeten Einspannstelle 5 befestigt und weist an dem der Einspannstelle 5 abgewandten Endbereich eine Angriffsstelle 6 für eine Schwingungsauslösung auf.

Am Basisblech 1 ist eine feststehende Induktionsspule 7 befestigt, die in einem Spulentragerahmen 8 angeordnet ist und einen zweiteiligen Wickelkern 9 aufweist. Die Enden der Spulenwicklung sind mit einer Drahtzu- und -abführung 10 verbunden.

Zwischen der Einspannstelle 5 und der Angriffsstelle 6 ist die Blattfeder 3 unter mehrmaliger Kröpfung seitlich an der Induktionsspule 7 bzw. dem Spulenträger 8 vorbeigeführt. Der die Einspannstelle 5 aufweisende Endbereich und der die Angriffsstelle 6 aufweisende Endbereich der Blattfeder 3 fluchten miteinander und sind daher entlang einer gedachten geraden Linie 11 angeordnet. Zwischen diesen Endbereichen ist die Blattfeder 3 C- oder U-förmig gebogen. In dem Bereich, in dem die Blattfeder 3 seitlich an der Induktionsspule 7 bzw. dem Spulenträger 8 vorbeigeführt ist, trägt die Blattfeder 3 einen Magnetkreis, der einen Permanentmagneten 12 umfasst. Der Permanentmagnet 12 ist an einem oberen Magnetrückschluss 13 angeordnet, wobei der untere Magnetrückschluss mit 14 bezeichnet ist. Die Induktionsspule 3 ist mit einer Seite in einem Luftspalt zwischen dem oberen und dem unteren Magnetrückschluss angeordnet.

## Patentansprüche

1. Wandler zum Wandeln von mechanischer in elektrische Energie umfassend einen vorzugsweise geschlossenen Magnetkreis und eine von dessen Magnetfluss durchsetzte Induktionsspule, wobei die Induktionsspule als feststehender Bauteil und der Magnetkreis als beweglicher Bauteil ausgebildet ist, der von einer Blattfeder gehalten zu Schwingbewegungen relativ zur Induktionsspule in lediglich einer Ebene auslenkbar angeordnet ist, **dadurch gekennzeichnet, dass** die Blattfeder an einer Einspannstelle befestigt ist und eine Angriffsstelle für eine Schwingungsauslösung aufweist und dass die Blattfeder zwischen der Einspannstelle und der Angriffsstelle unter mehrmaliger Kröpfung seitlich an der Induktionsspule vorbeigeführt ist.

2. Wandler nach Anspruch 1, **dadurch gekennzeichnet, dass** die Einspannstelle und die Angriffsstelle entlang einer gedachten, im Wesentlichen geraden Linie angeordnet sind, die im Wesentlichen parallel zu einer Achse des Magnetkreises verläuft, bevorzugt durch einen vom Magnetkreis eingeschlossenen Hohlraum verläuft.

3. Wandler nach Anspruch 1 oder 2, **dadurch gekennzeichnet, dass** der Magnetkreis im seitlich an der Induktionsspule vorbeigeführten Bereich der Blattfeder an dieser befestigt ist.

4. Wandler nach Anspruch 1, 2 oder 3, **dadurch gekennzeichnet, dass** die Blattfeder in der Schwingungsebene am Magnetkreis angreift.

5. Wandler nach einem der Ansprüche 1 bis 4, **dadurch gekennzeichnet, dass** die Blattfeder in der Ruhelage in seitlichem Abstand von der Induktionsspule oder einem Spulenträger an dieser bzw. diesem vorbeigeführt ist.

6. Wandler nach einem der Ansprüche 1 bis 5, **dadurch gekennzeichnet, dass** der Magnetkreis einen Dauermagneten aufweist.

7. Wandler nach einem der Ansprüche 1 bis 6, **dadurch gekennzeichnet, dass** der Magnetkreis einen oberen Magnetrückschluss und einen unterer Magnetrückschluss aufweist, wobei der obere Magnetrückschluss in Richtung einer Achse der Induktionsspule oberhalb und der untere Magnetrückschluss in Richtung einer Achse der Induktionsspule unterhalb der Induktionsspule angeordnet ist.

8. Wandler nach Anspruch 7, **dadurch gekennzeichnet, dass** der Magnetkreis die Induktionsspule zwischen dem oberen Magnetrückschluss und dem unterer Magnetrückschluss durchsetzt.

9. Wandler nach Anspruch 7 oder 8, **dadurch gekennzeichnet, dass** der Dauermanget am oberen Magnetrückschluss angeordnet ist.

10. Wandler nach einem der Ansprüche 2 bis 9, **dadurch gekennzeichnet, dass** ein Schwingungsanregungselement exzentrisch einer Drehachse eines drehbaren Bauteils an diesem angeordnet ist, wobei die Drehachse im Wesentlichen normal zur Schwingungsebene des Magnetkreises verläuft und die gedachte gerade Linie im Wesentlichen schneidet, welche die Einspannstelle und die Angriffsstelle miteinander verbindet.

11. Vorrichtung, beispielsweise Schlüssel oder Schließzylinder, zum Betätigen eines Sperrgliedes, umfassend einen Wandler nach einem der Ansprüche 1 bis 10.

12. Vorrichtung nach Anspruch 11, **dadurch gekennzeichnet, dass** der Wandler in einem Schloss, vorzugsweise im Zylinderkern eines Zylinderschlosses, derart angeordnet ist, dass die Schwingebene des Magnetkreises im Wesentlichen parallel zur Einführrichtung eines Schlüssels verläuft, wobei die Blattfeder beim Einführen des Schlüssels mit einem Mitnehmer des Schlüssels zusammenwirkt und zu Schwingbewegungen ausgelenkt wird.

13. Vorrichtung nach Anspruch 11, **dadurch gekennzeichnet, dass** der Wandler in der Reide eines Schlüssels angeordnet ist.
